# EUROPEAN PATENT APPLICATION

(11) **EP 1 746 398 A1**
(43) Date of publication of application: **24.01.2007**
(21) Application number: 05738960.3
(22) Date of filing: 12.05.2005
(51) Int. Cl.: G01L 1/10

(54) **HIGHLY SENSITIVE FORCE/MASS DETECTION METHOD AND DEVICE USING PHASE SYNCHRONIZATION CIRCUIT**

(30) Priority: 14.05.2004 JP 2004144751
(71) Applicant: Japan Science and Technology Agency, Kawaguchi-shi, Saitama 332-0012 (JP)
(72) Inventor: KAWAI, Shigeki, 1670031 Suginami-ku, Tokyo (JP); KAWAKATSU, Hideki, Setagaya-ku, Tokyo 1580086 (JP)
(74) Representative: Hoarton, Lloyd Douglas Charles
(86) International application number: PCT/JP2005/008664
(87) International publication number: WO 2005/111563

(57) **Abstract**

There are provided a highly sensitive force/mass detection method and device using a phase-locked loop, in which a phase noise of the mechanical element can be reduced using the phase-locked loop, by synchronizing a vibration signal of a mechanical element to an oscillation signal from a local oscillator which has a low phase noise and a high purity property. In the highly sensitive force/mass detection device using the phase-locked loop, an oscillation circuit of a mechanical vibrator 1 including a phase adjuster 10, a binarization circuit 5 for detecting a phase of an oscillation signal of the oscillation circuit, a local oscillator 7 having a low phase noise and a high purity property, a phase comparator 6 for comparing the phase of the oscillation signal of the mechanical vibrator 1 with a phase of an oscillation signal from the local oscillator 7, and a loop filter 8 connected to the phase comparator 7, are provided. An output of the phase comparator 6 is fed back to the phase adjuster 10 through the loop filter 8, and a phase noise of the mechanical vibrator 1 is reduced.

## Description

### Technical Field

The present invention relates to a highly sensitive force/mass detection method and device using a phase-locked loop, which can be used in a force detector, a vibration measuring device, a material detector, a mass detector, or the like.

### Background Art

Known techniques of force detector or mass detector can be roughly divided into three types.
(1) A mechanical vibrator is forcibly excited at an external fixed frequency and an interaction between force and mass is detected from an amplitude change or a phase change of the vibration signal. Generally, the technique is referred to as Slope Detection.
   Known studies in this field are described in the following non-patent documents 1 and 2.
(2) In order to vary a virtual Q value of a mechanical vibrator to vary detection ability, an external forcibly excited signal is controlled to feed back a signal corresponding to a speed signal of the mechanical vibrator and the signal is excited. Generally, the technique is referred to as Q value control.
   Known studies in this field are described in the following non-patent documents 3, 4, and 5.
(3) A vibration signal of a mechanical vibrator is fed back to an actuator through a semi-fixed phase shifter and self-excitation is operated, and a resonant frequency which varies according to an interaction of acting force or mass at the time is detected using an external frequency detection circuit. Generally, the technique is referred to as FM Detection.
   Known studies in this field are described in the following non-patent documents 6, 7, 8, and 9.

In addition, there is a method of using a phase-locked loop. In this method, an RC oscillator, an LC oscillator, a crystal oscillator, or the like is oscillated in phase locking, and this method has been used for several decades. Known study in this field is described in the following non-patent document 10.
Non-patent document 1: Atomic force microscope-force mapping and profiling on sub 100-Å scale, Y.Martin, C.C.Williams, and H.K.Wickramasinghe: J.Appl.Phys.61(1987)4723.
Non-patent document 2: Contact electrification using force microscopy, B.D.Terris, J.E. Stern, D.Rugar, and H.J.Mamin: Phys.Rev.Lett.63(1989)2669.
Non-patent document 3: Regulation of a microcantilever response by force feed back, J.Mertz, O.Marti, and J.Mlynek: Appl.Phys.Lett.62(1993)2344.
Non-patent document 4: High-speed tapping mode imaging with active Q control for atomic force microscopy, T.Sulchek, R.Hsieh, J.D.Adams, G.G.Yaralioglu, S.C.Minne, C.F.Quate, J.P.Cleveland, A.Atalar, and D.M.Adderton: Appl. Phys. Lett. 76(2000)1473.
Non-patent document 5: High-Q dynamic force microscopy in liquid and its application to living cells, J. Tamayo, A.D.L.Humphris, R.J.Owen, and M.J.Miles: Biophys.J.81(2001)526.
Non-patent document 6: Frequency modulation detection using high-Q cantilevers for enhanced force microscope sensitivity, T.R.Albrecht, P.Grütter, D.Horne, and D.Rugar: J.Appl.Phys.69(1991)668.
Non-patent document 7: Dynamic force microscopy by means of the phase-controlled oscillator method, U.Dürig, H.R.Steinauer, and N.Blanc: J.Appl.Phys.82(1997)3641.
Non-patent document 8: Fast digital electronics for application in dynamic force microscopy using high-Q cantilevers, Ch.Loppacher, M.Bammerlin, F.Battiston, M.Guggisberg, D.Müller, H.R.Hidber, R.Lüthi, E.Meyer, and H.J.Güntherodt: Appl.Phys.A66(1998)S215.
Non-patent document 9: Analog frequency modulation detector for dynamic force microscopy, K.Kobayashi, H. Yamada, H.Itoh, T. Horiuchi, K.Matsushige: Rev.Sci.Instrum.72(2001)4383.
Non-patent document 10: Phaselock technique, 2nd edition, F.M.Gardner: (Wiley, New York, 1979).

### Disclosure of Invention

Known force/mass detectors (force/mass sensors) have been used in various environments, for example, in vacuum, in air, in liquids. The existing detection methods are roughly divided into three as described above. Among the methods, the above (3) FM Detection is the method which can detect most sensitively.

A phase noise during self-excitation in this method is expressed as N/C = NFk_{B}T/8CQ² × (f₀/fₘ)², wherein Q denotes the mechanical Q value, C denotes the vibration energy, NF denotes the noise figure of the oscillation circuit, k_{B} denotes Boltzmann constant, T denotes the absolute temperature, f₀ denotes the resonant frequency, and fₘ denotes the offset frequency. The displacement detection of the mechanical vibrator generally includes many noise components and therefore, it is not possible to reduce the NF. Moreover, the Q value is, especially in liquids, in about the single digits and this is significantly bad.

Accordingly, the mechanical vibrator which oscillates as a sensor, as compared with general crystal oscillator or the like, has more phase noise. The phase noise acts as a background of a frequency shift due to effect from outside of a target to be measured such as force or mass, and this interferes with highly sensitive measurement.

That is, by the existing excitation method with the mechanical vibrator, it is not possible to control the phase noise of the vibration itself.

In view of the above drawbacks, it is an object of the present invention to provide a highly sensitive force/mass detection method and device using a phase-locked loop, in which a phase noise of the mechanical element can be reduced using the phase-locked loop, by synchronizing a vibration signal of a mechanical element to an oscillation signal from a local oscillator which has a low phase noise and a high purity property.

To achieve the above object, the present invention has the following characteristics:
[1] In a highly sensitive force/mass detection method using a phase-locked loop, a phase noise of the mechanical element is reduced using the phase-locked loop, by synchronizing a vibration signal of a mechanical element in which an oscillation frequency is varied by varying a phase by a phase adjuster in an oscillation circuit of the mechanical element, to an oscillation signal from a local oscillator which has a low phase noise and a high purity property.
[2] In the highly sensitive force/mass detection method using a phase-locked loop according to the above item [1], the mechanical element is a mechanical vibrator.
[3] In the highly sensitive force/mass detection method using a phase-locked loop according to the above item [1] or [2], as the local oscillator, a crystal oscillator is used.
[4] In the highly sensitive force/mass detection method using a phase-locked loop according to the above item [1] or [2], as the local oscillator, an atomic oscillator using an atom such as rubidium or cesium is used.
[5] In the highly sensitive force/mass detection method using a phase-locked loop according to [1], [2], [3], or [4], the phase-locked loop includes a loop filter.
[6] In the highly sensitive force/mass detection method using a phase-locked loop according to [5], wherein according to a property of the loop filter, the phase noise of the mechanical element is varied.
[7] A highly sensitive force/mass detection device using a phase-locked loop includes an oscillation circuit of a mechanical element including a phase adjuster, a binarization circuit for detecting a phase of an oscillation signal of the oscillation circuit, a local oscillator having a low phase noise and a high purity property, a phase comparator for comparing the phase of the oscillation signal of the mechanical element with a phase of an oscillation signal from the local oscillator, and a loop filter connected to the phase comparator. In the highly sensitive force/mass detection device, an output of the phase comparator is fed back to the phase adjuster through the loop filter to reduce a phase noise of the mechanical element.
[8] In the highly sensitive force/mass detection device using a phase-locked loop according to [7], the mechanical element is a mechanical vibrator.
[9] In the highly sensitive force/mass detection device using a phase-locked loop according to [7], the local oscillator is a crystal oscillator.
[10] In the highly sensitive force/mass detection device using a phase-locked loop according to [7], the local oscillator is an atomic oscillator using an atom such as rubidium or cesium.
[11] In the highly sensitive force/mass detection device using a phase-locked loop according to [7], the device further includes means of varying the phase noise of the mechanical element according to a property of the loop filter.

### Brief Description of the Drawings

Fig. 1 is a block diagram of a highly sensitive force/mass detection device using a phase-locked loop according to the present invention.
Fig. 2 is a view illustrating a relationship between phases and oscillation frequencies of a force/mass detector according to the present invention.
Fig. 3 is a view illustrating a relationship between frequencies and amplitude of a force/mass detector according to the present invention.

### Best Mode for Carrying Out the Invention

By being provided with an oscillation circuit of a mechanical element including a phase adjuster, a binarization circuit for detecting a phase of an oscillation signal of the oscillation circuit, a local oscillator having a low phase noise and a high purity property, a phase comparator for comparing a phase of the oscillation signal of the mechanical element with a phase of an oscillation signal from the local oscillator, and a loop filter connected to the phase comparator, an output of the phase comparator is fed back to the phase adjuster through the loop filter, and a phase noise of the mechanical element is reduced.

Using a force/mass detector in a frequency variable oscillation circuit in a phase-locked loop, detection ability of the force/mass detector is varied by synthesizing with an oscillation signal of an external local oscillator.

In the force/mass detector, using a feedback circuit, a self-vibration is produced, and a measurement of force/mass by the mechanical element can be performed with a control value for synchronizing the phase of the mechanical element by the oscillation signal from the external local oscillator.

That is, the phase adjustment circuit in the self-vibration circuit feeds back the value synchronously detected with the external local oscillation signal and thereby the force/mass detector always excites at a frequency of the local oscillation signal or a frequency of the frequency dividing rate. Then, by varying a phase noise of the self-vibration circuit according to a property of the loop filter of the feedback, the ability of the force/mass detector can be varied.

### EMBODIMENT.

Hereinafter, embodiments according to the present invention will be described in detail.

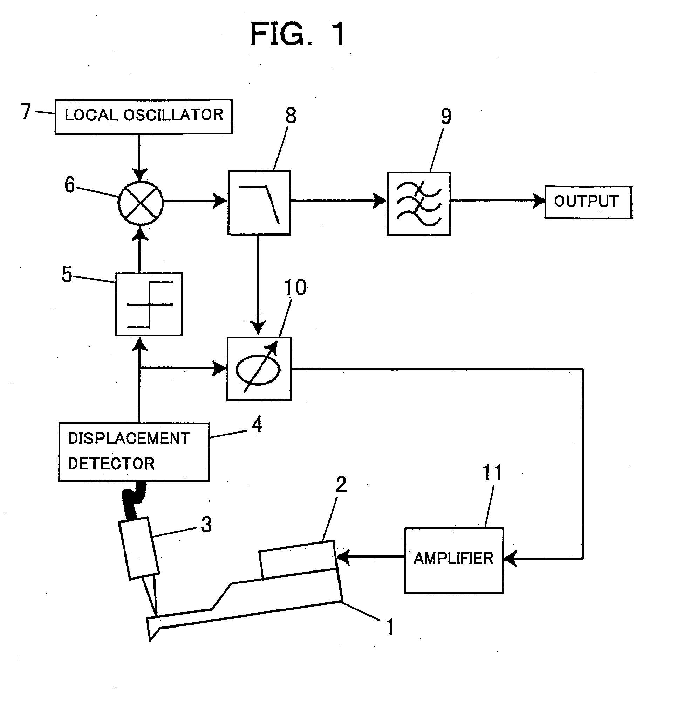

Fig. 1 is a block diagram of a highly sensitive force/mass detection device using a phase-locked loop according to the present invention.

In the drawing, reference numeral 1 denotes a mechanical vibrator, reference numeral 2 denotes an actuator which vibrates the mechanical vibrator 1, reference numeral 3 denotes an optical sensor part of the mechanical vibrator 1 which illuminates and receives light from the mechanical vibrator 1, reference numeral 4 denotes a displacement detector which detects displacement of the mechanical vibrator 1, reference numeral 5 denotes a binarization circuit having an automatic gain adjustment circuit, which is connected to an output side of the displacement detector 4, reference numeral 6 denotes a phase comparator which is connected to an output side of the binarization circuit 5, reference numeral 7 denotes a local oscillator which is connected to an input side of the phase comparator 6, reference numeral 8 denotes a loop filter which is connected to an output side of the phase comparator 6, reference numeral 9 denotes a low pass filter which is connected to an output side of the loop filter 8, reference numeral 10 denotes a phase adjuster which is connected to the loop filter 8 and the displacement detector 4, and reference numeral 11 denotes an amplifier (which can be an amplitude control circuit composed of a simple binarization circuit) having an automatic gain adjustment circuit which is connected to an output side of the phase adjuster 10, and an output of the amplifier 11 is applied to the actuator 2, and vibration of the mechanical vibrator 1 is controlled.

An oscillation frequency of the mechanical vibrator 1 varies corresponding to a Q value of the mechanical vibrator 1 by the phase adjuster 10 or the like in the oscillation circuit. In the conventional methods, the control value of the phase adjuster is semi-fixed.

According to the highly sensitive force/mass detection method according to the present invention, in order to enable to quickly respond to an external control signal and dynamically adjust, a phase-locked loop (phase shifter) is brought into the oscillation circuit. Thus, the oscillation circuit of the mechanical vibrator 1 can be a frequency variable oscillator in which the control signal of the phase adjuster 10 is to be an input.

That is, a phase of the oscillation signal of the mechanical vibrator 1 is compared with a phase of a signal of the local oscillator (crystal oscillator) 7 which has a low phase noise and a high purity property by the phase comparator 6. An output of the phase comparator 6 is, through the loop filter 8, fed back to the phase adjuster 10 in the oscillation circuit of the mechanical vibrator 1. According to a property of the loop filter 8, the phase noise of the mechanical vibrator 1 can be removed by about a degree of the phase noise of the local oscillator (crystal oscillator) 7. With respect to the local oscillator 7, an atomic oscillator using an atom such as rubidium or cesium can be used.

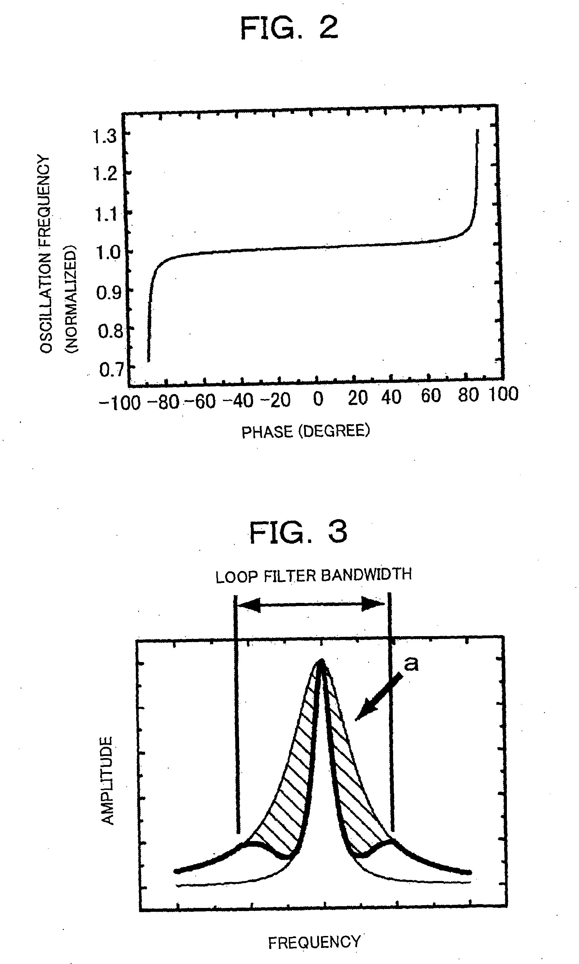

Fig. 2 is a view illustrating a relationship between phases and oscillation frequencies of a force/mass detector according to the present invention, and Fig. 3 is a view illustrating a relationship between frequencies and amplitude of a force/mass detector according to the present invention.

As clearly understood from Fig. 2, when a phase (degree) is from minus eighty degrees to plus eighty degrees, the oscillation frequency can be varied depending on a Q value and resonant frequency of the mechanical vibrator. That is, here, with the zero degrees of the phase adjuster 10 as the center, and using the fact that the oscillation frequency can be varied depending on the resonant frequency and the Q value of the mechanical vibrator 1 (in Fig. 2, from minus eighty degrees to plus eighty degrees), a oscillation frequency variable mechanical vibrator is realized. The oscillation frequency variable value δf is expressed as δf = f₀ / 2Q × tanθ.

In Fig. 3, the most outside line indicates phase noises of the mechanical vibrator in a case in which the phase-locked loop according to the present invention is not used, and the most inside line indicates phase noises of the local oscillation signal having good purity. The bold line indicates phase noises of the mechanical vibrator in a case in which the phase-locked loop according to the present invention is used, and the shaded parts indicate phase noises which can be removed using the phase-locked loop according to the present invention.

As clearly understood from Fig. 3, using the phase-locked loop according to the present invention, phase noises are removed (see the shaded parts a), and sharp vibration detection small in amplitude from the central frequency can be performed.

In the present invention, by using the phase-locked loop, the phase noise is reduced and the detection limit and resolution are varied in a fine mechanical element having relatively large phase noise of self-excited vibration, or in an environment in which the phase noise becomes large.

As described above, within the bandwidth of the loop filter, the phase noises of the mechanical vibrator can be removed. By setting the bandwidth of the low pass filter 9 in Fig. 1 to the degree around the bandwidth of the loop filter 8, a signal to noise ratio can be largely set. Accordingly, the detection ability can be improved. It is preferable to set the bandwidth of the loop filter 8 to a degree of a variable oscillation frequency width (different in each mechanical vibrator).

Conventionally, under environments such as in a liquid solution, it has been difficult to control a sensor to self-oscillate by dumping. According to the present invention, by incorporating the self-oscillation circuit into the phase synchronous detection, the problem can be solved.

Further,
(1) the present invention can be applied to force/mass detection using a scanning probe microscopy using a fine mechanical vibrator manufactured in micromechatronics or the like, or a phase-locked loop of other force detection devices.
(2) by using the present invention, the mechanical vibrator always realizes the self-oscillation resonance state always at a fixed frequency. Moreover, the phase noise at the time can be varied by varying the feedback property. The present invention can be applied to mass detection or material detection, and a scanning probe microscopy which detects an interaction between the mechanical vibrator and a sample or a change of mass adhered to the mechanical vibrator as a change of a feedback value from the phase comparator.

All detection systems can be roughly divided into two types. That is, an external detection system using light, or the like and a self-detection system in which a detection system is embedded into a mechanical vibrator itself in advance.

With respect to the external detection system, there are, for example, a detection system using an optical homodyne interferometer, a detection system using an optical heterodyne interferometer, a detection system using an optical lever, and a detection system using a knife edge.

With respect to the self-detection system, there are, for example, a detection system in which a piezo resistive element is embedded, a detection system in which a piezo thin film element is embedded, and a detection system in which a capacitance gauge is embedded.

All of the above detection systems are included within the application scope of the present invention.

The present invention is not limited to the above-described embodiment, various modifications can be made without departing from the scope of the invention, and these modifications shall not be excluded from the scope of the invention.

According to the present invention, the following advantages can be obtained.
(1) Highly sensitive detection in the force/mass detector can be performed, and performance of the device which uses the mechanical element as a sensor can be greatly improved.
(2) As compared with existing force/mass detectors, without depending on the properties or the environments of the detectors themselves, arbitrary detection performance can be obtained.
(3) Although existing detectors have predetermined detection performance depending on a phase noise of self-vibration, the phase noise is arbitrarily varied by performing synchronous detection, and detection performance of the detectors can be varied.

### Industrial Applicability

A highly sensitive force/mass detection method and device using a phase-locked loop according to the present invention can be used in a force detector, a vibration measuring device, a material detector, or a mass detector.

## Claims

1. A highly sensitive force/mass detection method using a phase-locked loop, wherein a phase noise of the mechanical element is reduced using the phase-locked loop, by synchronizing a vibration signal of a mechanical element in which an oscillation frequency is varied by varying a phase by a phase adjuster in an oscillation circuit of the mechanical element, to an oscillation signal from a local oscillator which has a low phase noise and a high purity property.

2. The highly sensitive force/mass detection method using a phase-locked loop according to claim 1, wherein the mechanical element is a mechanical vibrator.

3. The highly sensitive force/mass detection method using a phase-locked loop according to claim 1 or 2, wherein a crystal oscillator is used as the local oscillator.

4. The highly sensitive force/mass detection method using a phase-locked loop according to claim 1 or 2, wherein an atomic oscillator using an atom such as rubidium or cesium is used as the local oscillator.

5. The highly sensitive force/mass detection method using a phase-locked loop according to claim 1, 2, 3, or 4, wherein the phase-locked loop includes a loop filter.

6. The highly sensitive force/mass detection method using a phase-locked loop according to claim 5, wherein according to a property of the loop filter, the phase noise of the mechanical element is varied.

7. A highly sensitive force/mass detection device using a phase-locked loop comprising:
(a) an oscillation circuit of a mechanical element including a phase adjuster,
(b) a binarization circuit for detecting a phase of an oscillation signal of the oscillation circuit,
(c) a local oscillator having a low phase noise and a high purity property,
(d) a phase comparator for comparing the phase of the oscillation signal of the mechanical element with a phase of an oscillation signal from the local oscillator, and
(e) a loop filter connected to the phase comparator, wherein,
(f) an output of the phase comparator is fed back to the phase adjuster through the loop filter to reduce a phase noise of the mechanical element.

8. The highly sensitive force/mass detection device using a phase-locked loop according to claim 7, wherein the mechanical element is a mechanical vibrator.

9. The highly sensitive force/mass detection device using a phase-locked loop according to claim 7, wherein the local oscillator is a crystal oscillator.

10. The highly sensitive force/mass detection device using a phase-locked loop according to claim 7, wherein the local oscillator is an atomic oscillator using an atom such as rubidium or cesium.

11. The highly sensitive force/mass detection device using a phase-locked loop according to claim 7, further comprising means of varying the phase noise of the mechanical element according to a property of the loop filter.
